# EUROPÄISCHE PATENTSCHRIFT

(11) **EP 2 220 391 B1**
(45) Veröffentlichungstag und Bekanntmachung des Hinweises auf die Patenterteilung: **12.09.2012**
(21) Anmeldenummer: 08863995.0
(22) Anmeldetag: 11.12.2008
(51) Int. Cl.: F16D 13/75

(54) **DRUCKPLATTENBAUGRUPPE, INSBESONDERE FÜR EINE REIBUNGSKUPPLUNG MIT AUTOMATISCHEM VERSCHLEISSAUSGLEICH**
PRESSURE PLATE ASSEMBLY, PARTICULARLY FOR A FRICTION CLUTCH HAVING AUTOMATIC WEAR COMPENSATION
MODULE DE PLAQUE DE POUSSEE, EN PARTICULIER POUR UN EMBRAYAGE PAR FRICTION A COMPENSATION AUTOMATIQUE DE L'USURE

(30) Priorität: 22.12.2007 DE 102007062634; 25.11.2008 DE 102008044046
(43) Veröffentlichungstag der Anmeldung: 25.08.2010
(73) Patentinhaber: ZF Friedrichshafen AG, 88038 Friedrichshafen (DE)
(72) Erfinder: DÖRFLER, Matthias, 97453 Schonungen (DE); KNAUER, Wolfgang, 97486Königsberg (DE); LINK, Achim, 97422 Schweinfurt (DE); RÖLL, Gerhard, 97499 Donnersdorf (DE); VOGT, Sebastian, 97616 Bad Neustadt (DE); ZOTTMANN, Michael, 97464 Niederwerrn (DE)
(86) Internationale Anmeldenummer: PCT/EP2008/067314
(87) Internationale Veröffentlichungsnummer: WO 2009/080543

(56) Entgegenhaltungen:
- DE-A1- 10 049 652
- DE-A1- 19 731 611
- DE-A1- 19 910 858
- GB-A- 2 305 698

## Beschreibung

Die Erfindung betrifft eine Druckplattenbaugruppe, insbesondere für eine Reibungskupplung mit automatischem Verschleißausgleich, umfassend ein Gehäuseteil, welches mit einem eine Gegenreibfläche aufweisenden Gegengehäuseteil, wie z.B. ein Schwungrad, ein Zweimassenschwungrad oder einen mit der Kurbelwelle eines Motors in Wirkverbindung stehendem Eingangsteil verbunden wird, eine in dem Gehäuseteil angeordnete, in Richtung der Drehachse zu der Druckplattenbaugruppe bewegbar gehaltene, eine weitere Gegenreibfläche aufweisende Anpressplatte zum Zusammenwirken der Gegenreibflächen mit einer mit entsprechenden Reibflächen versehenen Kupplungsscheibe, einen Kraftspeicher, über dem die Anpressplatte mit einer Anpresskraft beaufschlagt wird, eine im Kraftübertragungsweg zwischen dem Kraftspeicher und der Anpressplatte wirkende Verschleißnachstellvorrichtung, wobei die Verschleißnachstellvorrichtung mindestens ein zur Verschleißnachstellung in einer Nachstellrichtung bewegbares Nachstellelement aufweist, wenigstens eine Spielgeberanordnung, umfassend ein an der Anpressplatte vorgesehenes Erfassungselement, das bei Auftreten von Verschleiß in Anlage an ein bezüglich dem Gehäuseteil oder dem Gegengehäuseteil durch Festlegung festgelegtes Blockierelement kommt oder bringbar ist.

Druckplattenbaugruppen der vorgenannten Art sind z.B. aus der DE 199 10 858 A1 und der DE 100 49 652 A1 bekannt.

Aus der DE 199 10 858 A1 ist eine Druckplattenbaugruppe bekannt, die mit einem automatischem Verschleißausgleich zum Ausgleich des Reibbelagverschleißes versehen ist, bei dem ein Arretierelement an dem Gehäuse angeordnet ist, und durch welches bei Bringen des Erfassungselementes in seine Stellung zum Freigeben des wenigstens einen Nachstellelementes das Erfassungselement gegen Bewegung in seiner Vorspannrichtung arretierbar ist. Hierbei ist am Gehäuse ein Wechselwirkungselement angebracht, welches mit dem Erfassungselement zur Deduktion des Reibbelagverschleißes zusammenwirkt. Das Wechselwirkungselement ist mittels eines in das Gehäuse eingebrachten Gewindes an diesem festgelegt und wird durch ein Sicherungselement gegenüber dem Gehäuse festgelegt. Bei dieser Ausführungsform ergibt sich nachteilig, dass das Wechselwirkungselement bis zum Anbinden des Kupplungsgehäuses an ein Schwungrad zu einer ungewollten Verschleißnachstellung des Verschleißnachstellelementes führen kann. Weiterhin ergibt sich, dass das Wechselwirkungselement durch seine Anlage am Kupplungsgehäuse und seiner eigenen Formgenauigkeit festlegt, in wieweit die Genauigkeit der Verschleißnachstellung erzielt wird. Insbesondere durch ungünstige Aufaddierung von Bauteiltoleranzen der dort gezeigten Reibungskupplung kann es zu einer unerwünschten fortwährenden Ungenauigkeit der Verschleißnachstellung kommen.

Weiterhin ist aus der DE 100 49 652 A1 eine Druckplattenbaugruppe für eine Reibungskupplung bekannt, bei der bei dem Verbinden der Gehäuseanordnung an der Schwungmassenanordnung das Blockierelement in einem zur Blockierwechselwirkung mit dem zugeordneten Erfassungselement bereiten Zustand kommt. Hierbei wird ebenfalls durch die Genauigkeit des Blockierelementes und der daran beteiligten Bauteile wie z.B. dem Gehäuse und der Anpressplatte die Genauigkeit der Verschleißnachstellung bestimmt. Auch hier kann es durch unvorteilhafte Aufsummierung von Bauteiltoleranzen zu einer nicht ausreichenden bzw. zu großen Verscheißnachstellung des Reibbelagverschleißes kommen. Insbesondere die exakte Lage des Blockierelementes bezüglich dem Erfassungselement stellt sicher, in wieweit der vorbestimmte Arbeitspunkt bzw. der vorbestimmte Einkuppelpunkt auch bei Reibbelagverschleiß konstant bleibt.

Es ist daher Aufgabe der Erfindung eine Druckplattenbaugruppe bzw. eine Reibungskupplung bereits zu stellen, die die genannten Nachteile nicht aufweist. Weiterhin ist es Aufgabe der Erfindung, eine Druckplattenbaugruppe bereitzustellen, bei der die Bauteiltoleranzen der darin vorgesehenen Einzelteile nicht zu einer ungewollten Verschiebung des Verschleißnachstellpunktes, bis zu dem die Verschleißnachstellung den Verschleiß nachstellt, führt. Weiterhin ist es Aufgabe der Erfindung, eine Druckplattenbaugruppe bereitzustellen, bei der die auf die Anpressplatte ausgeübte Anpresskraft im Neuzustand und nach einem Verschleißnachstellvorgang exakt erreicht wird.

Erfindungsgemäß werden die Aufgaben gelöst durch eine Ausgestaltung dahingehend, dass ein bezüglich des Gehäuseteils ortsfest gelagertes Einstellelement vorgesehen ist, vermittels dem durch Beaufschlagung des Blockierelementes die Anlage des Erfassungselementes am Blockierelement veränderbar ist. Indem das Blockierelement durch das Einstellelement beaufschlagbar ist, kann die axiale Lage des Blockierelementes relativ zum Erfassungselement entsprechend dem Grad der Beaufschlagung durch das Einstellelement verändert werden. Es ist demnach die Anlage des Erfassungselementes am Blockierelement infolge von Reibbelagverschleiß entsprechend einstellbar und veränderbar. Hiermit kann der Punkt, ab dem durch das Erfassungselement bzw. der Verschleißnachstellvorrichtung ein entsprechender Reibbelagverschleiß festgestellt wird, exakt eingestellt werden. Es kommt also nicht vor, dass durch ungünstige Addierung von Bauteiltoleranzen die Verschleißnachstellung zu früh auslöst und somit die Lage des Kraftspeichers in der Druckplattenbaugruppe nicht der gewünschten Einbauposition im verschleißfreien Zustand bzw. verschleißnachgestellten Zustand entspricht. Auch bei der Ausführung des Kraftspeichers als Membran- oder Tellerfeder kann durch ein zu frühzeitiges auslösen bzw. ein damit einhergehendes Überkompensieren des Verschleißbetrages die Einkuppelposition der Druckplattenbaugruppe dahingehend nachteilig ausfallen, dass die erforderliche Anpresskraft nicht erreicht wird. Weiterhin kann bei entsprechendem Einstellen des sogenannten Nullpunktes, also wenn das Erfassungselement in Anlage an dem Blockierelement kommt, auch bei entsprechendem ungünstigen Schwanken der Anpresskraft der jeweiligen einzelnen Membran- oder Tellerfedern jeweils die geforderte Anpresskraft durch entsprechende Verlagerung bzw. durch entsprechendes Einstellen der Anlage des Erfassungselementes an dem Blockierelement für jede einzelne Druckplattenbaugruppe separat eingestellt werden. Es ist z.B. möglich, die Druckplattenbaugruppe dahingehend zu konstruieren, dass die Verschleißnachstellvorrichtung bereits im Neuzustand eine gewisse Verschleißnachstellbewegung ausführt bis eine Position erreicht wird, die einem verschleißnachgestellten Zustand, also dem Arbeitspunkt der Druckplattenbaugruppe nach ideal erfolgter Verschleißnachstellung, entspricht. Hierbei kann dann zur Erzielung eines exakten Einkuppelpunktes bzw. zum Erzielen einer im Einkuppelpunkt exakt anliegenden Anpresskraft durch entsprechend einstellbare Beaufschlagung des Blockierelementes vermittels eines Einstellelements eine konstante Anpresskraft der jeweiligen Druckplattenbaugruppe in der Serienfertigung erreicht werden.

Daher ist in weiterer Ausgestaltung der Erfindung vorgesehen, dass vermittels dem Einstellelement die Position des Blockierelementes gegenüber dem Erfassungselement veränderbar ist. Insbesondere durch Einstellung der axialen Lage des Blockierelementes bzw. des Bereiches des Blockierelementes, welcher zur Anlage an dem Erfassungselement bei Vorliegen von Verschleiß kommt, kann die vorgenannte vorteilhafte Wirkung erreicht werden.

In weiterer Ausgestaltung der Erfindung ist vorgesehen, dass durch das Einstellelement einstellbar ist, ab welchem Verschleißbetrag der Reibflächen das Erfassungselement zur Anlage an dem Blockierelement kommt. Insbesondere, wenn die neuen, unverschlissenen Reibbeläge der Kupplungsscheibe dahingehend in ihrer axialen Dicke ausgeführt sind, dass diese zu Beginn, also im Neuzustand, eine Verschleißstärke aufweisen, die größer als übliche, normale Dicke der Reibbeläge ist, kann vorgesehen sein, dass erst ab dem erstmaligen Erreichen einer vorbestimmten Verschleißmenge der Reibbeläge die Verschleißnachstellvorrichtung in Aktion tritt. Dies kann insbesondere für Reibungskupplungen vorgesehen sein, bei denen die neuen Reibbeläge mit einer auf der Oberfläche der Reibbeläge bzw. der Anpressplatte und der Gegenanpressplatte aufgetragenen, den Reibwert erhöhenden Beschichtung versehen sind.

In weiterer Ausgestaltung der Erfindung ist daher vorgesehen, dass durch das Einstellelement das Blockierelement in seiner Lage bezüglich dem Gegengehäuseteil einstellbar ist. Insbesondere, wenn das Blockierelement sich nach dem Verschrauben des Gehäuseteils mit dem Gegengehäuseteil am Gegengehäuse abstützt, stellt das Gegengehäuseteil die Referenzfläche in Axialrichtung dar und kann entsprechend als Bezug zur Einstellung des Blockierelementes durch Beaufschlagung durch das Einstellelement herangezogen werden. Hierbei lässt sich besonders vorteilhaft die Stellung des Kraftspeichers im eingekuppelten Zustand der Druckplattenbaugruppe einstellen.

In weiterer Ausgestaltung der Erfindung ist daher vorgesehen, dass durch das Einstellelement das Blockierelement in seiner Lage bezüglich der Gegenreibfläche des Gegengehäuseteils einstellbar ist.

Eine weitere Ausgestaltung der Erfindung sieht vor, dass das Einstellelement am Gehäuseteil oder dem Gegengehäuseteil eingebracht ist. Das Einstellelement ist vorteilhaft in dem Gehäuseteil oder dem Gegengehäuseteil eingeschraubt und beaufschlagt das Blockierelement zum Einstellen der axialen Lage des Blockierelementes bezüglich dem Erfassungselement. Bei Einbringen des Einstellelementes in dem Gegengehäuseteil ist dieses vorteilhaft fest verbunden mit dem Gehäuseteil um seine Wirkung auf das Blockierelement auszuüben. In einer solchen Ausführungsform umfasst die erfinderische Druckplattengruppe auch das Gegengehäuseteil. Da das Gehäuseteil bzw. das Gegengehäuseteil als besonders steife Bauteile ausgeführt sind, kann das Einstellelement besonders kostengünstig und besonders vorteilhaft in der Genauigkeit der Wirkung auf das Blockierelement dort eingebracht werden.

In alternativer Ausgestaltung kann vorgesehen sein, dass das Einstellelement im Blockierelement eingebracht ist. Insbesondere wenn das Einstellelement im Blockierelement eingebracht ist, wie z.B. durch ein im Blockierelement eingebrachtes Gewinde, in welchem das Einstellelement eingeschraubt ist, kann sich besonders vorteilhaft das Einstellelement am Gehäuseteil oder dem Gegengehäuseteil abstützen zur Beaufschlagung des Blockierelementes. Entsprechend kann auch hier durch elastische Verformung des Bereichs des Blockierelementes welcher zur Anlage an dem Erfassungselement kommt, eine entsprechende Nullpunkt-Einstellung der Verschleißnachstellung besonders genau erzielt werden.

Vorteilhafterweise ist daher vorgesehen, dass die Festlegung des Blockierelementes bezüglich dem Gehäuseteil oder Gegengehäuseteil durch Beaufschlagung des Einstellelementes im Wesentlichen nicht beeinflusst wird. Insbesondere wird hierbei vorgesehen, dass das Blockierelement zumindest Beaufschlagungsrichtung durch das Einstellelement axial fest bzw. unelastisch, starr am Gehäuseteil bzw. dem Gegengehäuseteil festgelegt ist.

Eine weitere Ausgestaltung der Erfindung sieht vor, dass die Festlegung des Blockierelementes bezüglich dem Gehäuseteil oder Gegengehäuseteil im montierten Zustand der Druckplattenbaugruppe axial fest ist. Hierbei beaufschlagt das Einstellelement das Blockierelement derart, dass die Festlegung bezüglich dem Gehäuseteil bzw. dem Gegengehäuseteil unverändert bleibt durch die Beaufschlagung durch das Einstellelement. Insbesondere beaufschlagt das Einstellelement das Blockierelement außerhalb der Festlegung des Blockierelementes bezüglich dem Gehäuseteil und dem Gegengehäuseteil. Es wird demnach durch die Beaufschlagung die Anlage des Blockierelementes am Erfassungselement derart verändert, dass das Einstellelement das Blockierelement außerhalb der Festlegung des Blockierelementes bezüglich dem Gehäuseteil beaufschlagt. Hierdurch kann vorteilhafterweise das Blockierelement sich sowohl am Einstellelement als auch an seiner Anlage bzw. Festlegung bezüglich dem Gehäuseteil bzw. Gegengehäuseteil in folge der Fliehkräfte beim Betrieb der Reibungskupplung abstützen.

In weiterer erfinderischer Ausgestaltung ist daher vorgesehen, dass die Festlegung des Blockierelementes bezüglich dem Gehäuseteil oder Gegengehäuseteil im montierten Zustand der Druckplattenbaugruppe axial fest ist. Dies ist insbesondere unabhängig von der Beaufschlagung durch das Einstellelement bzw. vom Grad der Beaufschlagung durch das Einstellelement. Somit kann das Blo9ckierelement durch die axiale Festlegung an dem Gehäuseteil oder dem Gegengehäuseteil auch durch das Einstellelement stark beaufschlagt werden.

In weiterer Ausgestaltung der Erfindung ist daher vorgesehen, dass das Blockierelement zumindest einen axial elastischen Abschnitt aufweist zum Zusammenwirken mit der Beaufschlagung durch das Einstellelement. Durch die Ausgestaltung des axial elastischen Abschnittes bzw. des elastischen Abschnittes zum Zusammenwirken mit dem Einstellelement wird erreicht, dass einerseits die Anlage des Blockierelementes am Einstellelement während des Betriebs der Reibungskupplung konstant verbleibt als auch dass die Anlage des Blockierelementes am Erfassungselement bei Auftreten von Reibbelagverschleiß einstellbar ist.

Eine weitere erfindungsgemäße Ausgestaltung sieht daher vor, dass das Einstellelement bezüglich dem Blockierelement verlagerbar ist zum Einstellen des Blockierelementes für seine Anlage am Erfassungselement. Vorteilhaft kann so eingestellt werden, wann das Blockierelement im Verschleißfall zur Ablage am Erfassungselement kommt. Es wird dadurch bestimmt, ab welcher Verschleißstärke der Reibflächen der Kupplungsscheibe eine Nachstellung erfolgt, also welche Einbauposition des Kraftspeichers bzw. Lage des Kraftspeichers im eingekuppelten Zustand aufrechterhalten wird. Durch die, auch veränderliche einstellbare Beaufschlagung des Blockierelementes durch das Einstellelement kann der Arbeitspunkt auf der Kraft-Wege-Kurve eines als membran- oder Tellerfeder ausgeführten Kraftspeichers nach dem Zusammenbau bestimmt werden. Unterberücksichtigung der Toleranzen von Anpressplatte, Gehäuseteil oder Kupplungsscheibe oder entsprechend auch einer Schwankung der jeweiligen unterschiedlichen Kraft-Wege-Kurven bzw. von einander leicht abweichende Kraft-Wege-Kurven der jeweiligen Membran- oder Tellerfedern. So können Toleranzen in der Anpresskraft auch im Neuzustand vollständig ausgeglichen werden und durch entsprechend angepasste Beaufschlagung des Blockierelementes durch das Einstellelement auf die gewünschte Größe festgelegt werden.

Weiterhin wird in erfindungsgemäßer Ausgestaltung vorgesehen, dass das Einstellelement durch eine Schraube bzw. einen ein Gewinde aufweisenden Bolzen gebildet wird. Hierbei weist in weiterer erfindungsgemäßer Ausgestaltung das Gewinde bzw. ein mit dem Gewinde in Wirkverbindung stehender Abschnitt eine entsprechende Möglichkeit zur Verdrehsicherung des Einstellelementes auf. Hierbei kann eine dem Reibwert erhöhende Beschichtung bzw. eine als Schraubensicherungslack vorgesehene Beschichtung des Gewindes und des Einstellelementes vorgesehen sein. Dies erlaubt eine besonders kostengünstige Ausgestaltung.

In weiterer erfindungsgemäßer Ausgestaltung ist daher vorgesehen, dass das Einstellelement in das Gehäuseteil oder das Gegengehäuseteil eingeschraubt ist. Insbesondere wenn das am Einstellelement vorgesehene Gewinde derart ausgeführt ist, dass dieses sich selbst oder bzw. selbstschneidend in eine entsprechende im Gehäuseteil bzw. Gegengehäuseteil eingebrachte Bohrung einschneidet bzw. einschraubt ist die Reibung im Gewindebereich so hoch, dass dies einer Verdrehsicherung entspricht.

Es ist daher in erfindungsgemäßer Ausgestaltung weiterhin vorgesehen, dass das Einstellelement gegenüber dem Gehäuseteil oder Gegengehäuseteil gegen Verdrehen gesichert ist. Hierbei kann auch eine mechanische, dem Einstellvorgang des Einstellelementes nachfolgende Verformung im Gewindebereich als Verdrehsicherung vorgesehen sein.

Weiterhin ist es vorgesehen, dass erfindungsgemäß das Einstellelement gegenüber dem Gehäuseteil oder dem Gegengehäuseteil in axialer Richtung gesichert ist.

Eine weitere Ausgestaltung der Erfindung sieht daher vor, dass das Blockierelement durch ein einen Anschlag zum Zusammenwirken mit dem Erfassungselement aufweisenden, bezüglich dem Gehäuseteil gelagerten Bauteil gebildet wird. Vorteilhaft wird durch das Vorsehen einer Anschlagfläche zum Zusammenwirken mit dem Erfassungselement die Funktion der verschleißten Nachstellvorrichtung exakt gesteuert.

Eine weitere erfindungsgemäße Ausgestaltung der Druckplattenbaugruppe sieht daher auch vor, dass das Blockierelement durch ein mit dem Gehäuseteil verbundenes Bauteil gebildet wird, welches bei Verbinden des Gehäuseteils mit dem Gegengehäuseteil in eine Stellung zum Zusammenwirken mit dem Erfassungselement gebracht wird. Insbesondere durch das Verbinden des Gehäuseteils mit dem Gegengehäuseteil kann ein mit dem Gehäuseteil bzw. dem Gegengehäuseteil verbundenes Blockierelement exakt bezüglich diesen beiden Bauteilen bzw. exakt und sicher bezüglich der gewünschten Lage des Erfassungsabschnittes der Druckplattenbaugruppe positioniert werden. Erfindungsgemäß kann dann das Blockierelement durch das Einstellelement relativ zur wirklichen Lage des Erfassungselementes dann korrigiert werden.

Um vor dem Verbinden des Gehäuseteils mit dem Gegengehäuseteil eine unbeabsichtigte Verschleißnachstellung der Verschleißnachstellvorrichtung zu vermeiden, ist daher vorgesehen, dass das Blockierelement vor dem Verbinden das Gehäuseteils mit dem Gegengehäuseteil aus der Stellung zum Zusammenwirken mit dem Erfassungselement verschwenken kann.

Um eine erfindungsgemäße Druckplattenbaugruppe auch ohne Kupplungsscheibe und zugehöriger Gegengehäuseteil sicher herstellen zu können und durch eine schnelle Montage in dem Kraftfahrzeugsantriebsstrang einzubringen, ist vorgesehen, dass das Blockierelement vor dem Verbinden des Gehäuseteils mit dem Gegengehäuseteil durch eine lose, aber untrennbare Verbindung bezüglich dem Gehäuseteil gelagert ist.

Daher ist in weiterer Ausgestaltung der Erfindung vorgesehen, dass das Blockierelement bei Verbinden des Gehäuseteils mit dem Gegengehäuseteil zur Anlage an dem Einstellelement kommt. Durch Abstützen des Blockierelementes am Einstellelement ist das Blockierelement gegenüber dem Erfassungselement exakt dann positioniert, um eine exakte Funktion der Verschleißnachstellung zu gewährleisten.

Demnach sieht eine weitere erfindungsgemäße Weiterbildung vor, dass das Blockierelement unter Vorspannung an dem Einstellelement anliegt. Erfindungsgemäß ist hierbei das Blockierelement elastisch verformt bzw. vorgespannt durch die Abstützung am Einstellelement. Die Anlage am Erfassungsabschnitt kann so durch das Einstellelement eingestellt werden und verändert sich auch im Betrieb der Reibungskupplung nicht. Hierbei kann das Einstellelement seine Lage bezüglich der Gegenreibfläche des Gegengehäuseteils dahingehend ändern, so unterschiedlich stark das Blockierelement beaufschlagen.

In Weiterbildung der Erfindung ist daher vorgesehen, dass das Blockierelement sich am Einstellelement einerseits und an dem Gegengehäuseteil oder Gehäuseteil andererseits abstützt. Somit wird das Blockierelement in beiden Axialrichtungen exakt positioniert. Durch die Verbindung zwischen Gehäuseteil mit Gegengehäuseteil ist es ausreichend, wenn das Blockierelement nur grob positioniert wird. Es muss also nicht exakt gefertigt werden. Die Verbindung zwischen Gehäuseteil und Gegengehäuseteil legt das Blockierelement also nur bedingt fest. Das Blockierelement weist in dieser Axialfestlegung also noch etwas Spiel auf bzw. Verformbarkeit auf. Erst durch die Beaufschlagung mit dem Einstellelement wird die exakte axiale Position des Blockierelementes zum Erfassungsabschnitt erreicht.

Eine weitere Ausgestaltung der Erfindung sieht daher vor, dass das Blockierelement bei Verbinden des Gehäuseteils mit dem Gegengehäuseteil in radialer Richtung, insbesondere nach radial außen bezüglich dem Gehäuseteil festgelegt wird. Hierbei ist es ausreichend, wenn sich das Blockierelement an einer bezüglich des Gehäuseteils ausgebildeten Kante oder Fläche in radialer Richtung abstützt.

Eine weitere Ausgestaltung der Erfindung wird demnach dadurch erreicht, dass das Blockierelement bei Verbinden des Gehäuseteils mit dem Gegengehäuseteil elastisch verformt wird und so bezüglich dem Gehäuseteil axial festgelegt wird. Der Klemmbereich zum Festlegen des Blockierelementes bezüglich des Gehäuseteils zumindest in axialer Richtung ist hierbei so dimensioniert, dass das Blockierelement elastisch verformt wird. Die Klemmung erlaubt eine exakte, spielfreie Festlegung.

In weiterer erfinderischer Ausgestaltung ist ein Verfahren zur Erstellung einer Druckplattenbaugruppe nach den Merkmalen des Anspruches 1 vorgesehen, bei dem die Druckplattenbaugruppe auf einem die Einbausituation der Druckplattenbaugruppe darstellenden Montageelement aufgesetzt wird, welche das Blockierelement entsprechend festlegt und das Einstellelement zur Beaufschlagung des Blockierelementes eingestellt wird.

Hierbei entspricht die Einbausituation dem Einbau der Druckplattenbaugruppe mit der zugehörigen, bzw. einer entsprechenden Kupplungsscheibe und entsprechendem Gegengehäuseteil, wie z.B. einem Zweimassenschwungrad, einem Schwungrad oder einer einem Eingangsteil im Antriebsstrang eines Kraftfahrzeuges. Dies kann durch ein entsprechend ausgebildetes Montageelement bereitgestellt werden. Für den fall, dass die jeweilige Druckplattenbaugruppe mit einer jeweils zugeordneten Kupplungsscheibe einzeln gepaart wird, kann das Montageelement entsprechend ausgebildet werden und die Verschleißnachstellung erreicht eine sehr genaue Güte hinsichtlich des Arbeitspunktes des Kraftspeichers. Hierbei kann dem vorgenannten Verfahren in einem weiteren Verfahrensschritt auch eine jeweils explizit der jeweiligen Druckplattenbaugruppe zugeordnete Kupplungsscheibe an dem Montageelement während der Einstellung des Einstellelementes zur Beaufschlagung des Blockierelementes zugeordnet werden. Alternativ ist es auch erfindungsgemäß vorgesehen, dass entsprechend der Toleranzlage, also der axialen Dicke der Reibbeläge im jeweils mit der vorgesehenen Einkuppelkraft beaufschlagten Kupplungsscheibe, das Montageelement in seiner entsprechenden Ausgestaltung eingestellt wird zur Anwendung des vorgenannten Verfahrens nach Anspruch 26. Auch wenn das Montageelement ein einer für die Druckplattenbaugruppe vorbestimmten Kupplungsscheibe entsprechendes Element beinhaltet, also keine Einzelpaarung von jeweiliger Kupplungsscheibe und Druckplattenbaugruppe vorgenommen wird, kann eine sehr genaue Einstellung der Druckplattenbaugruppe erreicht werden. Es werden die Toleranzen zumindest der Druckplattenbaugruppe selbst hinsichtlich der Nachstellfunktion der Verschleißnachstellung ausgeglichen. Es kann hierbei die Funktion der Druckplattenbaugruppe bei dem erfinderischen Verfahren als auch durch die erfinderische Ausgestaltung der Druckplattenbaugruppe optimiert werden. Dies entweder hinsichtlich genauer Position des Kraftspeichers in der Druckplattenbaugruppe im eingekuppelten Zustand. Hier wird also die Stellung des Kraftspeichers im eingekuppelten Zustand sehr exakt eingestellt und anschließend im Verschleißfall auch sehr exakt beibehalten. Hierdurch wird auch die Lage des am Kraftspeicher angreifenden Einrücklagers und damit der Betätigungsvorrichtung der Reibungskupplung sehr genau platziert/eingestellt. Die Lage der Betätigungsvorrichtung relativ zur Druckplattenbaugruppe erfolgt also in sehr geringen Toleranzgrenzen. Dies ist insbesondere dann von großem Vorteil, wenn der Kraftspeicher die auf die Anpressplatte wirkende Anpresskraft nicht selbst oder nur teilweise erzeugt und die Anpresskraft über den Kraftspeicher von einem beispielsweise außerhalb der Druckplattenbaugruppe angebrachten Anpresskraft Erzeugungselement aufgebracht wird und über den Kraftspeicher auf die Anpressplatte weitergeleitet wird. Der Kraftspeicher ist daher in dieser Anmeldung auch als ein Übertragungselement zu verstehen, welches die Anpresskraft auf die Anpressplatte überträgt. Durch die erfindungsgemäße Ausgestaltung wird die Position der am Kuppelvorgang beteiligten Bauteile auch bei Reibbelagverschleiß in vorbestimmten, engen Grenzen gehalten. Unabhängig von ungünstiger Aufaddierung der vorliegenden Bauteiltoleranzen.

Auch wenn andererseits der Kraftspeicher als Membran- oder Tellerfeder, welche die Anpresskraft auf die Anpressplatte erzeugt, ausgebildet ist, kann durch die erfindungsgemäße Ausgestaltung der Druckplattenbaugruppe und dem erfinderischen Verfahren dahingehend vorteilhaft sichergestellt werden, dass die Verschleißnachstelleinrichtung insoweit exakt den Reibbelagverschleiß nachstellt, dass exakt die gewünschte Anpresskraft im eingekuppelten Zustand anliegt. Der Arbeitspunkt im eingekuppelten Zustand bzw. der Arbeitsbereich kann entsprechend des individuellen Verlaufs der Kraft-Wege-Kurve eines jeden einzelnen Kraftspeichers exakt eingestellt werden. Damit wird eine gewünschte Anpresskraft unabhängig der Fertigungstoleranzen, insbesondere der Fertigungstoleranzen einer Membran- oder Tellerfeder erzielt werden.

Eine weitere erfindungsgemäße Ausgestaltung sieht ein Verfahren vor, zur Erstellung einer Druckplattenbaugruppe nach den Merkmalen des Anspruches 1 beinhaltend eine Kupplungsscheibe und eine Gegengehäuseteil, dadurch gekennzeichnet, dass die Druckplattenbaugruppe mit der Kupplungsscheibe und dem Gegengehäuseteil miteinander zu einem Modul zusammengefügt werden und das Blockierelement bezüglich dem Gehäuseteil oder dem Gegengehäuseteil festgelegt wird und das Einstellelement zur Beaufschlagung des Blockierelementes eingestellt wird.

Bei der Erstellung einer erfindungsgemäßen Duckplattenbaugruppe nach Anspruch 1 zusammen mit wenigstens einer Kupplungsscheibe sowie einem Gegengehäuseteil als Kupplungsmodul können die unter dem nach Anspruch 26 genannten Vorteile besonders gut zur Wirkung kommen, da hier die individuelle Zuordnung der Bauteile dann auch besonders exakt durch die Erfindung hinsichtlich der Verschleißnachstellung und deren Genauigkeit eingestellt werden kann.

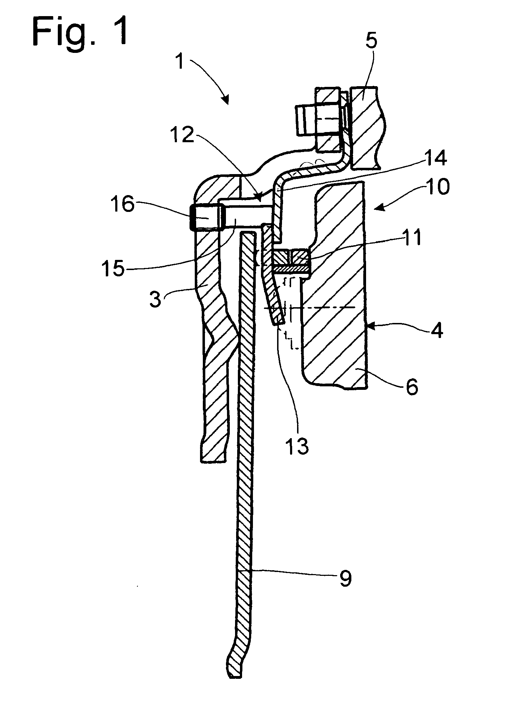

Bei der in Fig. 1 dargestellten erfindungsgemäß ausgestalteten Druckplattenbaugruppe 1 ist ein Gehäuseteil 3 vorgesehen, welches mit einem Gegengehäuseteil 5 verbunden ist. Innerhalb des Gehäuseteils 3 ist eine Anpressplatte 6 mit einer der beiden Gegenreibflächen 4 drehfest, jedoch axial verlagerbar gegenüber dem Gehäuseteil 3 eingebracht. Weiterhin ist ein als Membranfeder ausgebildeter Kraftspeicher 9 am Gehäuseteil 3 gelagert zur Beaufschlagung der Anpressplatte 6 mit einer Anpresskraft. Es kann jedoch als Kraftspeicher 9 auch ein Hebelelement vorgesehen sein, welches eine außerhalb der Druckplattenbaugruppe 1 erzeugte Anpresskraft über ein Kupplungsbetätigungssystem auf den Kraftspeicher 9 überträgt. Eine solche Ausführung wird im Stand der Technik allgemein als ,normally-open-clutch', also eine Kupplung des Normal-Offen-Typs bezeichnet. An der Anpressplatte 6 ist eine Verschleißnachstellvorrichtung 10 ausgebildet, die zumindest ein Nachstellelement 11 zum Ausgleich des Verschleißes der Reibbeläge der Kupplungsscheibe aufweist. Zur Erfassung und Bestimmung des Reibbelagverschleißes im eingekuppelten Zustand ist eine Spielgeberanordnung 12 mit einem an der Anpressplatte 6 gelagerten Erfassungselement 13 vorgesehen, welches das Nachstellelement 11 hinsichtlich einer Nachstellbewegung zum Ausgleich von Reibbelagverschleiß insoweit solange hindert, als dass kein ausreichender Reibbelagverschleiß über das Erfassungselement 13 erfasst wurde. Zur Erfassung des Reibbelagverschleißes wirkt das Erfassungselement 13 im eingekuppelten Zustand mit einem Blockierelement 14 zusammen, welches eine axial feste Lage gegenüber der am Gegengehäuseteil 5 ausgebildeten, und der hier nicht dargestellten, zugehörigen Gegenreibfläche bzw. eine axial feste Lage bezüglich dem Gehäuseteil 3 und dem Gegengehäuseteil 5 einnimmt. Weiterhin ist an der erfindungsgemäßen Druckplattenbaugruppe 1 ein Einstellelement 15 vorgesehen, welches das Blockierelement 14 beaufschlagt dahingehend, dass die axiale Lage des Blockierelementes 14 gegenüber dem Gehäuseteil 3 bzw. dem Gegengehäuseteil 5 veränderbar bzw. einstellbar ist. Hierbei ist das Blockierelement 14 derart ausgebildet, dass im zusammengebauten Zustand der Reibungskupplung, also wenn die Druckplattenbaugruppe 1 mit dem Gegengehäuseteil 5 fest verbunden ist, das Blockierelement 14 in der Regel gegenüber dem Erfassungselement 13 in Axialrichtung zu weit hervorsteht. Dies im eingekuppelten Zustand der Druckplattenbaugruppe 1 mit nicht verschlissenen Reibbelägen der zugehörigen Kupplungsscheibe. In einer solchen Auslegung würde zunächst das Erfassungselement 13 im vollständig eingekuppelten Zustand der Druckplattenbaugruppe 1 zu früh, also bereits beim Einkuppelvorgang der Druckplattenbaugruppe, zur Anlage an dem Blockierelement 14 kommen. Das Blockierelement 14 ist erfindungsgemäß als elastisches Bauteil ausgeführt dahingehend, das nun dieses durch das Einstellelement 15 beaufschlagt wird und entsprechend elastisch verformt wird, insoweit dass das Blockierelement 14 gegenüber dem Erfassungselement 13 die gewünschte, vorbestimmte axiale Lage zur exakten Funktion der Verschleißnachstellvorrichtung 10 einnimmt. Indem durch das Einstellelement 15 das Blockierelement 14 bei einer jeden Druckplattenbaugruppe 1 gesondert in seiner Beaufschlagung auf das Blockierelement 14 einstellbar ist, kann für jede Druckplattenbaugruppe 1 gesondert die axiale Lage des Blockierelementes 14, also die Lage des Blockierelementes 14 relativ zur Verschleißnachstellvorrichtung 10 bzw. relativ zum Erfassungselement 13 eingestellt werden. Hierdurch ist es möglich, unabhängig von der durch Bauteiltoleranzen hervor gerufenen Ungenauigkeit der Funktion der Verschleißnachstellvorrichtung 10 bzw. Ungenauigkeit der axialen Dicken der in der Druckplattenbaugruppe 1 vorgesehenen Bauteile einen entsprechenden Ausgleich bzw. eine entsprechende Anpassung in der Funktion des Erfassungselementes 13 mit dem Blockierelement 14 vorzunehmen. Es kann also die Exaktheit der Verschleißnachstellung dahingehend eingestellt werden, dass das Erfassungselement 13 dann zur Anlage am Blockierelement 14 im eingekuppelten Zustand kommt, wenn die konstruktiv vorbestimmte Einkuppelposition der Druckplattenbaugruppe 1 im eingekuppelten Zustand erreicht ist. Hierdurch kann insbesondere die Stellung des Kraftspeichers 9 in der Druckplattenbaugruppe 1 bzw. die Kraftkonstanz der Anpresskraft bei einem als Membran- oder Tellerfeder ausgeführten Kraftspeichers 9 im vollständig eingekuppelten Zustand der Druckplattenbaugruppe 1 erreicht werden. Bei der in dieser Figur 1 dargestellten Ausführungsform ist das Blockierelement 14 am Gehäuseteil 3 formschlüssig befestigt dahingehend, dass solange das Gegengehäuseteil 5 und das Gehäuseteil 3 noch nicht miteinander verbunden sind, das Blockierelement 14 aus dem Zusammenwirkungsbereich mit dem Einstellelement 15 bzw. mit dem Erfassungselement 13 verschwenken kann. Erst mit dem Zusammenbringen des Gehäuseteils 3 mit dem Gegengehäuseteil 5 wird das Blockierelement 14 insoweit befestigt, als dass dieses durch Anlage an eine am Gegengehäuseteil 5 ausgebildeten Anlagefläche in die Position verschwenkt, in der es in vorbestimmter Weise mit dem Erfassungselement 13 und dem Einstellelement 15 zusammenwirkt.

Des Weiteren sei bezüglich der Funktion der erfindungsgemäßen Verschleißnachstellvorrichtung 10 noch auf die beiden Offenlegungsschriften DE 10 49 652 A1 und DE 199 10 858 A1 verwiesen, deren Offenbarungsgehalt ausdrücklich in diese Anmeldung mit eingebracht sein soll.

Bei der gezeigten Ausführungsform weist das Einstellelement 15 einen Gewindeabschnitt 16 auf, durch den das Einstellelement 15 in das Gehäuseteil 3 eingeschraubt ist, und die Beaufschlagung des Blockierelementes 14 verändert werden kann. Hierdurch kann durch Anlage des Einstellelementes 15 an dem Blockierelement 14 die Beaufschlagung zur Einstellung der Lage des Blockierelementes 14 relativ zum Erfassungselement 13 entsprechend den Bauteiltoleranzen variiert werden. Erfindungsgemäß ist der Gewindeabschnitt 16 mit einer Schraubensicherung, wie z.B. einem Schraubensicherungslack oder einer reibwerterhöhenden Beschichtung bzw. alternativ mit einem mit dem Gehäuseteil 3 zur Schraubensicherung zusammenwirkenden Verzahnungsbereich ausgestattet, um eine Änderung der Beaufschlagung des Blockierelements 14 durch das Einstellelement 15 im Betrieb der Druckplattenbaugruppe 1 im Kraftfahrzeugantriebsstrang zu vermeiden. Alternativ ist es auch möglich, das Einstellelement 15 in dem Gegengehäuseteil 5 einzubringen und von dort aus das Blockierelement 14 in der gewünschten Weise zu beaufschlagen.

### Bezugszeichenliste

- 1: Druckplattenbaugruppe
- 2: Verschleißausgleich
- 3: Gehäuseteil
- 4: Gegenreibfläche
- 5: Gegengehäuseteil
- 6: Anpressplatte
- 7: Kupplungsscheibe
- 8: Reibbeläge
- 9: Kraftspeicher
- 10: Verschleißnachstellvorrichtung
- 11: Nachstellelement
- 12: Spielgeberanordnung
- 13: Erfassungselement
- 14: Blockierelement
- 15: Einstellelement
- 16: Gewindeabschnitt

## Patentansprüche

1. Druckplattenbaugruppe (1), insbesondere für eine Reibungskupplung, mit automatischem Verschleißausgleich, umfassend
- ein Gehäuseteil (3), welches mit einem eine Gegenreibfläche aufweisenden Gegengehäuseteil (5), wie zum Beispiel ein Schwungrad, ein Zweimassenschwungrad oder einem mit der Kurbelwelle eines Motors in Wirkverbindung stehenden Eingangsteil verbunden wird
- eine in dem Gehäuseteil (3) angeordnete, in Richtung der Drehachse zu der Druckplattenbaugruppe (1) bewegbar gehaltene, eine weitere Gegenreibfläch (4) aufweisende Anpressplatte (6) zum Zusammenwirken der Gegenreibfläche (4) mit an Reibbelägen einer Kupplungsscheibe ausgebildeten Reibflächen,
- einen Kraftspeicher (9), über dem die Anpressplatte (6) mit einer Anpresskraft beaufschlagt wird,
- eine im Kraftübertragungsweg zwischen dem Kraftspeicher (9) und der Anpressplatte (6) wirkende Verschleißnachstellvorrichtung (10), wobei die Verschleißnachstellvorrichtung (10) mindestens ein zur Verschleißnachstellung in einer Nachstellrichtung bewegbares Nachstellelement (11) aufweist,
- wenigstens eine Spielgeberanordnung (12), umfassend ein an der Anpressplatte (6) vorgesehenes Erfassungselement (13), das bei Auftreten von Verschleiß in Anlage an ein bezüglich dem Gehäuseteil (3) oder Gegengehäuseteil (5) durch Festlegung gelagertes Blockierelement (14) kommt oder bringbar ist,
**dadurch gekennzeichnet,**
**dass** ein bezüglich dem Gehäuseteil (3) ortsfest gelagertes Einstellelement (15) vorgesehen ist, durch welches durch Beaufschlagung des Blockierelementes (14) die Anlage des Erfassungselementes (13) am Blockierelement (14) veränderbar ist, und wobei durch das Einstellelement (15) das Blockierelement (14) in seiner Lage bezüglich dem Gegengehäuseteil (5) einstellbar ist.

2. Druckplattenbaugruppe (1) nach einem der Ansprüche 1,
**dadurch gekennzeichnet,**
**dass** durch das Einstellelement (15) das Blockierelement (14) in seiner Lage bezüglich der Gegenreibfläche das Gegengehäuseteil (5) einstellbar ist.

3. Druckplattenbaugruppe (1) nach einem der Ansprüche 1 oder 2,
**dadurch gekennzeichnet,**
**dass** das Einstellelement (15) im Blockierelement (14) eingebracht ist.

4. Druckplattenbaugruppe (1) nach einem der vorhergehenden Ansprüche,
**dadurch gekennzeichnet,**
**dass** die Festlegung des Blockierelementes (14) bezüglich dem Gehäuseteil (3) oder Gegengehäuseteil (5) durch die Beaufschlagung des Einstellelementes (15) im Wesentlichen nicht beeinflusst wird.

5. Druckplattenbaugruppe (1) nach einem der vorhergehenden Ansprüche,
**dadurch gekennzeichnet,**
**dass** die Festlegung des Blockierelementes (14) bezüglich dem Gehäuseteil (3) oder Gegengehäuseteil (5) räumlich gesondert von der Beaufschlagung durch das Einstellelement (15) erfolgt.

6. Druckplattenbaugruppe (1) nach Anspruch 5,
**dadurch gekennzeichnet,**
**dass** die Festlegung des Blockierelementes (14) bezüglich dem Gehäuseteil (3) oder Gegengehäuseteil (5) im montierten zustand der Druckplattenbaugrupp (1) axial fest ist.

7. Druckplattenbaugruppe (1) nach einem der vorhergehenden Ansprüche,
**dadurch gekennzeichnet,**
**dass** das Blockierelement (14) zumindest einen axial elastischen Abschnitt aufweist zum Zusammenwirken mit der Beaufschlagung durch das Einstellelement (15).

8. Druckplattenbaugruppe (1) nach einem der vorhergehenden Ansprüche,
**dadurch gekennzeichnet,**
**dass** das Einstellelement (15) bezüglich dem Blockierelement (14) verlagerbar ist zum Einstellen des Blockierelementes (14) für seine Anlage am Erfassungsetement (13)

9. Druckplattenbaugruppe (1) nach Anspruch 1,
**dadurch gekennzeichnet,**
**dass** das Blockierelement (14) vor dem Verbinden des Gehäuseteils (3) mit dem Gegengehäuseteil (5) durch eine lose, aber untrennbare Verbindung bezüglich dem Gehäuseteil (3) gelagert ist.

10. Druckplattenbaugruppe (1) nach einem der Ansprüche 1,
**dadurch gekennzeichnet,**
**dass** das Blockierelement (14) bei Verbinden des Gehäuseteils (3) mit dem Gegengehäuseteil (5) zur Anlage an dem Einstellelement (15) kommt.

11. Druckplattenbaugruppe (1) nach Anspruch 10,
**dadurch gekennzeichnet,**
**dass** das Blockierelement (14) unter Vorspannung an dem Einstellelement (16) anliegt.

12. Druckplattenbaugruppe (1) nach Anspruch 10,
**dadurch gekennzeichnet,**
**dass** das Blockierelementl (14) bei Verbinden des Gehäuseteils (3) mit dem Gegengehäuseteil (5) elastisch verformt wird und so bezüglich dem Gehäuseteil (3) axial festgelegt wird.

13. Verfahren zur Erstellung einer Druckptattenbaugruppe (1) nach den Merkmalen des Anspruches 1,
**dadurch gekennzeichnet,**
**dass** die Druckplattenbaugruppe (1) auf einem die Einbausituation der Druckplattenbaugrupp (1) darstellenden Montageelement aufgesetzt wird, welche das Blockierelement (14) entsprechend festlegt und das Einstellelement (15) zur Beaufschlagung des Blockierelements (14) eingestellt wird.

14. Verfahren zur Erstellung einer Druckplattenbaugruppe (1) nach den Merkmalen
des Anspruches 1, beinhaltend eine Kupplungsscheibe (7) und ein Gehäuseteil (3), **dadurch gekennzeichnet,**
**dass** die Druckplattenbaugruppe (1) mit der Kupplungsscheibe und dem Gegengehäuseteil (5) miteinander zu einem Modul zusammengeführt werden und das Blockierelement (14) bezüglich dem Gehäuseteil (3) oder dem Gegengehäuseteil(5) festgelegt wird und das Einstellelement(15) zur Beaufschlagung des Blockierelementes (14) eingestellt wird.

## Claims

1. Pressure plate assembly (1) in particular for a friction clutch, with automatic wear compensation, comprising
- a housing part (3) which is connected to a counterpart housing part (5), such as for example a flywheel, a dual-mass flywheel or an input part operatively connected to the crankshaft of an engine, which has a counterpart friction surface,
- a pressure plate (6), which is arranged in the housing part (3), is held so as to be movable in the direction of the rotational axis relative to the pressure plate assembly (1) and has a further counterpart friction surface (4), for the interaction of the counterpart friction surface (4) with friction surfaces formed on friction linings of a clutch disk,
- a force store (9), by means of which the pressure plate (6) is loaded with a pressure force,
- a wear adjusting device (10) which acts in the force transmission path between the force store (9) and the pressure plate (6), with the wear adjusting device (10) having at least one adjusting element (11) which is movable in an adjusting direction for wear adjustment,
- at least one play transmitter arrangement (12), comprising a detection element (13) which is provided on the pressure plate (6) and which, in the event of the occurrence of wear, comes into or can be placed in contact with a blocking element (14) which is mounted with respect to the housing part (3) or counterpart housing part (5) by fixing,
**characterized**
**in that** an adjusting element (15) is provided which is mounted so as to be positionally fixed with respect to the housing part (3) and by means of which the contact between the detection element (13) and the blocking element (14) can be varied by loading the blocking element (14), and wherein the blocking element (14) can be adjusted in its position with respect to the counterpart housing part (5) by means of the adjusting element (15).

2. Pressure plate assembly (1) according to one of Claims 1,
**characterized**
**in that** the blocking element (14) can be adjusted in its position with respect to the counterpart friction surface the counterpart housing part (5) by means of the adjusting element (15).

3. Pressure plate assembly (1) according to one of Claims 1 or 2,
**characterized**
**in that** the adjusting element (15) is inserted in the blocking element (14).

4. Pressure plate assembly (1) according to one of the preceding claims,
**characterized**
**in that** the fixing of the blocking element (14) with respect to the housing part (3) or counterpart housing part (5) is substantially not influenced by the loading of the adjusting element (15).

5. Pressure plate assembly (1) according to one of the preceding claims,
**characterized**
**in that** the fixing of the blocking element (14) with respect to the housing part (3) or counterpart housing part (5) takes place spatially separately from the loading by the adjusting element (15).

6. Pressure plate assembly (1) according to Claim 5,
**characterized**
**in that** the fixing of the blocking element (14) with respect to the housing part (3) or counterpart housing part (5) is axially fixed in the assembled state of the pressure plate assembly (1).

7. Pressure plate assembly (1) according to one of the preceding claims,
**characterized**
**in that** the blocking element (14) has at least one axially elastic section for interaction with the loading by the adjusting element (15).

8. Pressure plate assembly (1) according to one of the preceding claims,
**characterized**
**in that** the adjusting element (15) is movable with respect to the blocking element (14) for the purpose of adjusting the blocking element (14) for its contact with the detection element (13).

9. Pressure plate assembly (1) according to Claim 1,
**characterized**
**in that** the blocking element (14), before the connection of the housing part (3) to the counterpart housing part (5), is mounted with respect to the housing part (3) by means of a loose but non-releasable connection.

10. Pressure plate assembly (1) according to one of Claims 1,
**characterized**
**in that** the blocking element (14) comes into contact with the adjusting element (15) during the connection of the housing part (3) to the counterpart housing part (5).

11. Pressure plate assembly (1) according to Claim 10,
**characterized**
**in that** the blocking element (14) bears against the adjusting element (16) under preload.

12. Pressure plate assembly (1) according to Claim 10,
**characterized**
**in that** the blocking element (14) is elastically deformed during the connection of the housing part (3) to the counterpart housing part (5), and is thereby axially fixed with respect to the housing part (3).

13. Method for creating a pressure plate assembly (1) according to the features of Claim 1,
**characterized**
**in that** the pressure plate assembly (1) is placed on a mounting element which represents the installation situation of the pressure plate assembly (1) and which fixes the blocking element (14) correspondingly, and the adjusting element (15) is adjusted so as to load the blocking element (14).

14. Method for creating a pressure plate assembly (1) according to the features of Claim 1, comprising a clutch disk (7) and a housing part (3),
**characterized**
**in that** the pressure plate assembly (1) is assembled with the clutch disk and the counterpart housing part (5) to form a module and the blocking element (14) is fixed with respect to the housing part (3) or the counterpart housing part (5) and the adjusting element (15) is adjusted so as to load the blocking element (14).

## Revendications

1. Module de plaque de poussée (1), en particulier pour un embrayage à friction, avec une compensation automatique de l'usure, comprenant :
- une partie de boîtier (3) qui est connectée à une partie de boîtier conjuguée (5) présentant une surface de friction conjuguée, par exemple un volant d'inertie, un volant d'inertie à deux masses ou une partie d'entrée en liaison fonctionnelle avec le vilebrequin d'un moteur,
- une plaque de pression (6) disposée dans la partie de boîtier (3), maintenue de manière déplaçable dans la direction de l'axe de rotation vers le module de plaque de poussée (1), présentant une surface de friction conjuguée supplémentaire (4) pour faire coopérer la surface de friction conjuguée (4) avec des surfaces de friction réalisées sur des garnitures de friction d'un disque d'embrayage,
- un accumulateur de force (9) par le biais duquel la plaque de pression (6) est sollicitée avec une force de pression,
- un dispositif de rattrapage de l'usure (10) agissant dans la voie de transfert de force entre l'accumulateur de force (9) et la plaque de pression (6), le dispositif de rattrapage de l'usure (10) présentant au moins un élément de rattrapage (11) déplaçable en vue du rattrapage de l'usure dans une direction de rattrapage,
- au moins un agencement de détection de jeu (12) comprenant un élément de détection (13) prévu sur la plaque de pression (6), qui, à l'apparition d'une usure, vient ou peut être amené en appui contre un élément de blocage (14) monté par fixation par rapport à la partie de boîtier (3) ou la partie de boîtier conjuguée (5),
**caractérisé en ce**
**qu'**un élément d'ajustement (15) monté fixement par rapport à la partie de boîtier (3) est prévu, lequel permet de modifier, par sollicitation de l'élément de blocage (14), l'application de l'élément de détection (13) contre l'élément de blocage (14), et l'élément de blocage (14) pouvant être ajusté dans sa position par rapport à la partie de boîtier conjuguée (5) grâce à l'élément d'ajustement (15).

2. Module de plaque de poussée (1) selon l'une quelconque des revendications 1,
**caractérisé en ce que**
l'élément de blocage (14) peut être ajusté en position par l'élément d'ajustement (15) par rapport à la surface de friction conjuguée de la partie de boîtier conjuguée (5).

3. Module de plaque de poussée (1) selon l'une quelconque des revendications 1 ou 2,
**caractérisé en ce que**
l'élément d'ajustement (15) est introduit dans l'élément de blocage (14).

4. Module de plaque de poussée (1) selon l'une quelconque des revendications précédentes,
**caractérisé en ce que**
la fixation de l'élément de blocage (14) par rapport à la partie de boîtier (3) ou la partie de boîtier conjuguée (5) n'est pas sensiblement affectée par la sollicitation de l'élément d'ajustement (15).

5. Module de plaque de poussée (1) selon l'une quelconque des revendications précédentes,
**caractérisé en ce que**
la fixation de l'élément de blocage (14) par rapport à la partie de boîtier (8) ou la partie de boîtier conjuguée (5) s'effectue de manière séparée spatialement de la sollicitation par l'élément d'ajustement (15).

6. Module de plaque de poussée (1) selon la revendication 5,
**caractérisé en ce que**
la fixation de l'élément de blocage (14) par rapport à la partie de boîtier (3) ou la partie de boîtier conjuguée (5) est fixée axialement dans l'état monté du module de plaque de poussée (1).

7. Module de plaque de poussée (1) selon l'une quelconque des revendications précédentes,
**caractérisé en ce que**
l'élément de blocage (14) présente au moins une portion axialement élastique pour coopérer avec la sollicitation par l'élément d'ajustement (15).

8. Module de plaque de poussée (1) selon l'une quelconque des revendications précédentes,
**caractérisé en ce que**
l'élément d'ajustement (15) peut être déplacé par rapport à l'élément de blocage (14) pour ajuster l'élément de blocage (14) en vue de son application contre l'élément de détection (13).

9. Module de plaque de poussée (1) selon la revendication 1,
**caractérisé en ce que**
l'élément de blocage (14) est monté avant l'assemblage de la partie de boîtier (3) à la partie de boîtier conjuguée (5) par une connexion lâche mais inamovible par rapport à la partie de boîtier (3).

10. Module de plaque de poussée (1) selon l'une quelconque des revendications 1,
**caractérisé en ce que**
l'élément de blocage (14), lors de l'assemblage de la partie de boîtier (3) à la partie de boîtier conjuguée (5), vient en appui contre l'élément d'ajustement (15).

11. Module de plaque de poussée (1) selon la revendication 10,
**caractérisé en ce que**
l'élément de blocage (14) s'applique avec précontrainte contre l'élément d'ajustement (16).

12. Module de plaque de poussée (1) selon la revendication 10,
**caractérisé en ce que**
l'élément de blocage (14), lors de l'assemblage de la partie de boîtier (3) à la partie de boîtier conjuguée (5), est déformé élastiquement et est ainsi fixé axialement par rapport à la partie de boîtier (3).

13. Procédé pour créer un module de plaque de poussée (1) selon les caractéristiques de la revendication 1,
**caractérisé en ce que**
le module de plaque de poussée (1) est posé sur un élément de montage représentant la situation d'installation du module de plaque de poussée (1), qui fixe l'élément de blocage (14) de manière correspondante et l'élément d'ajustement (15) est ajusté pour solliciter l'élément de blocage (14).

14. Procédé pour créer un module de plaque de poussée (1) selon les caractéristiques de la revendication 1, contenant un disque d'embrayage (7) et une partie de boîtier (3),
**caractérisé en ce que**
le module de plaque de poussée (1) avec le disque d'embrayage et la partie de boîtier conjuguée (5) sont réunis pour former un module et l'élément de blocage (14) est fixé par rapport à la partie de boîtier (3) ou la partie de boîtier conjuguée (5), et l'élément d'ajustement (15) est ajusté pour solliciter l'élément de blocage (14).
